# NEUE EUROPÄISCHE PATENTSCHRIFT

(11) **EP 1 898 247 B2**
(45) Veröffentlichungstag und Bekanntmachung des Hinweises auf die Entscheidung über den Einspruch: **16.10.2013**
(45) Hinweis auf die Patenterteilung: 09.12.2009
(21) Anmeldenummer: 06019000.6
(22) Anmeldetag: 11.09.2006
(51) Int. Cl.: G02B 23/16

(54) **Teleskopmontierung**
Telescope mount
Support de télescope

(43) Veröffentlichungstag der Anmeldung: 12.03.2008
(73) Patentinhaber: ASTELCO Systems GmbH, 82152 Martinsried (DE)
(72) Erfinder: Aniol, Peter Astelco Systems GmbH, 82152 Martinsried (DE); Constantino, Mario Astelco Systems GmbH, 82152 Martinsried (DE)
(74) Vertreter: Hofmann, Harald

(56) Entgegenhaltungen:
- DE-A1- 2 846 069
- GB-A- 2 056 109
- US-A- 3 795 150
- DATABASE WPI Derwent Publications Ltd., London, GB; AN 1986-175402 XP002416622 -& SU 1 195 324 A (SALNIKOV LEONID S; SOLBOLEVA GALINA A; GNEDOJ VALENTIN) 30. November 1985 (1985-11-30)
- PIERRE Y.BELY: 'the design and construction of large telescopes', 2003, SPRINGER VERLAG, ISBN 0387955127 Seiten 234 - 237 AND 273-277
- 'Zeitschrift "Antriebstechnik"', Bd. NR.2, 2005 vol. 'Besser direkt - Torqueantriebe machen Produktionsmaschinen wirtschaftlicher', Seiten 58 - 60

## Beschreibung

Die Erfindung bezieht sich auf Teleskopmontierungen. Im Speziellen bezieht sich die Erfindung auf motorisch angetriebene Teleskopmontierungen.

Teleskope in jeglicher Größe zur Himmels- oder Stemenbeobachtung von der Erdoberfläche aus sind üblicherweise um zumindest zwei Achsen drehbar aufgehängt. Damit soll zum einen das Teleskop schnell auf einen zu beobachtenden Himmelskörper oder ein Beobachtungsobjekt gerichtet werden und zum anderen dieses Objekt über einen konstanten Zeitraum trotz der Erddrehung beobachtet werden. Zu letzterem sind Systeme bekannt, mit denen das Teleskop automatisch der Erddrehung nachgeführt werden kann.

Prinzipiell sind für Teleskope verschiedene Montierungen bekannt, wie zum Beispiel parallaktische Montierung, azimutale Montierung, Alt-Alt-Montierung (Typisierung) oder Gabelmontierung, Deutsche Montierung, Knicksäulenmontierung (Bauarten) und weitere.

Bei der parallaktischen Montierung ist das Teleskop um zwei zueinander senkrecht stehende Achsen drehbar gelagert, wobei die Achsen so ausgerichtet sind, dass eine Achse, die Rektaszensionsachse bzw. Stundenachse parallel zur Rotationsachse der Erde/zur Erdachse ausgerichtet ist, und die zweite Achse, die Deklinationsachse, senkrecht zu der ersten Achse liegt und somit erlaubt, das Teleskop von Himmels-Pol zu Himmels-Pol zu schwenken. Ist die Montierung einmal auf ein Himmelsobjekt eingestellt, muss bei der parallaktischen Montierung das Teleskop während der Beobachtungszeit in der Regel nur mehr um eine einzige Achse, nämlich um die Stundenachse, dem zu beobachtenden Objekt nachgeführt werden (Ausgleich der Erddrehung).

Bei der azimutalen Montierung ist das Teleskop ebenfalls um zwei zueinander senkrecht stehende Achsen drehbar gelagert, wobei die Achsen so ausgerichtet sind, dass eine Achse, die Azimutachse, senkrecht zum Horizont ausgerichtet ist, und die zweite Achse, die Elevationsachse, senkrecht zu der ersten Achse liegt und somit erlaubt, das Teleskop von Horizont zu Zenit zu schwenken. Dieser Montierungstyp ist mechanisch einfacher, hat aber den Nachteil, dass die Montierung zur Nachführung eines Himmelsobjektes (Ausgleich der Erddrehung) ständig und mit sich ständig verändernden Geschwindigkeiten um beide Achsen gedreht werden muss.

Bei der "Alt-Alt"-Montierung ist das Teleskop ebenfalls um zwei zueinander senkrecht stehende Achsen drehbar gelagert, wobei die Achsen so ausgerichtet sind, dass die erste Achse parallel zum Horizont ausgerichtet ist, und die zweite Achse senkrecht zu der ersten Achse liegt. Die Alt-Alt-Aufstellung hat besondere Vorteile unter anderem bei der Zenit-Beobachtung.

Heute verfügbare Montierungen weisen dabei häufig motorisch, insbesondere elektromotorisch angetriebene Achsen sowie eine dazugehörige Steuerung auf, mit der das Teleskop einerseits schnell auf ein zu beobachtendes Himmelsobjekt positioniert werden kann und in der Folge das eingestellte Himmelsobjekt über einen längeren Zeitraum beobachtet werden kann, ohne dass das Teleskop manuell nachgeführt werden müsste oder zeitraubende Nachjustierungen nötig sind.

Zur Drehung des Teleskops um die jeweiligen Achsen werden dazu im Stand der Technik meist herkömmliche Elektromotoren verwendet, die über Getriebe, Zahnriemen oder andere Kraftübertragungen mit der jeweiligen Verstellwelle der Montierung verbunden sind; dabei kann je nach gewählter Übersetzung entweder eine hohe Positioniergeschwindigkeit zum schnellen Auffinden von und Einstellen des Teleskops auf bestimmte Himmelsobjekte, oder aber eine hohe Positioniergenauigkeit sowie eine exakte Beibehaltung der Einstellung auf ein Himmelsobjekt bevorzugt sein. Bei herkömmlichen Systemen muss daher immer ein Kompromiss zwischen einerseits Positioniergenauigkeit/Nachführgenauigkeit und andererseits Positioniergeschwindigkeit eingegangen werden.

Herkömmliche Antriebe, bei denen die Kraft mittels Getriebe, z.B. Schneckengetriebe, auf die Wellen übertragen werden, leiden unter mechanischen Unzulänglichkeiten, die die Positionier- und Nachführgenauigkeit der Montierung negativ beeinträchtigen, z.B. aufgrund periodischer Schneckenfehler, Getriebespiel, Hysterese bei Richtungsumkehr, unterschiedliche Reibung bei unterschiedlichen Betriebs-Temperaturen (Teleskope stehen im Freien!), und weitere.

Die US 3,795,150 beschreibt ein System für die schnelle Positionierung kardanisch aufgehängter Objekte. Dabei sind an verschiedene Achsen Antriebe vorgesehen.

Des Weiteren sind in der Veröffentlichung Antriebstechnik 2/2005 unter dem Titel "Besser direkt" Torqueantriebe beschrieben, die Produktionsmaschinen wirtschaftlicher machen sollen.

Sollen sowohl die Positioniergeschwindigkeit als auch die Positioniergenauigkeit gleichzeitig maximiert werden, so ist dies bei Systemen nach dem Stand der Technik mit erheblichem konstruktiven Aufwand, beispielsweise zur Verbesserung der Getriebe oder Kraftübertragungen sowie der Verstellmotoren verbunden, was zu erheblich höheren Kosten führt. Zudem sind an dem Gehäuse angebrachte Kraftübertragungen und Motoren oftmals sperrig und können die Beweglichkeit des Teleskops oder auch die Bedienung desselben einschränken.

Die GB 2 056 109 A beschreibt eine zwei-achsige Teleskopmontierung, bei der Motoren an einem Montierungsgehäuse befestigt sind, um Verstellwellen anzutreiben. Eine Verstellwelle weist einen Flansch zur Befestigung an einer Basis auf.

Es besteht somit der Bedarf an einer verbesserten Teleskopmontierung, die gleichzeitig hohe Positioniergeschwindigkeit, exakte Nachführung und hohe Positioniergenauigkeit ermöglicht. Es besteht zudem der Bedarf an einer Teleskopmontierung, die bei hoher Positioniergeschwindigkeit und Positioniergenauigkeit einen einfachen Austausch der Optik ermöglicht.

Es besteht auch der Bedarf an einer Teleskopmontierung, welche einen möglichst vibrationsfreien und ruckfreien Antrieb bereitstellt.

Um diesem Bedarf gerecht zu werden und zur Überwindung der vorgenannten Nachteile beim Stand der Technik schlägt die vorliegende Erfindung eine Dreheinrichtung einer Teleskopmontierung gemäß Anspruch 1 bzw. eine Vorrichtung mit zumindest einer Dreheinrichtung vor.

Die Erfindung umfasst dabei eine Vorrichtung zur drehbaren Montierung eines Teleskops mit zumindest zwei zueinander im Wesentlichen orthogonalen Achsen, wobei das Teleskop um die zumindest zwei Achsen mittels einer jeweiligen Dreheinrichtung einer Teleskopmontierung drehbar ist, die jeweilige Dreheinrichtung eine erste Verstellwelle und einer Abtriebswelle aufweist welche einen Direktantrieb mit einer Verstellwelle ausbildet wobei die jeweiligen Achsen der Wellen fluchten, die Abtriebswelle und die Verstellwelle einstückig ausgebildet sind und der Abtrieb ein Elektromotor in Form eines Torque-Motors ist, dessen Rotor an der Verstellwelle befestigt ist, die jeweilige Dreheinrichtung ein Gehäuse umfasst, in welchem die Verstellwelle drehbar gelagert ist, wobei ein Stator des Elektromotors an dem Gehäuse befestigt ist, die Verstellwelle der esten Dreheinrichtug an dem Gehäuse der zweiten Dreheinrichtung befestigbar ist und die jeweiligen Dreheinrichtungen in ihrem Aufbau gleich sind, so dass sie modular zusammensetzbar sind.

Damit kann das Teleskop bei geeigneter Ausrichtung der beiden zueinander orthogonalen Achsen auf jeden beliebigen Punkt und auf jedes beliebige Beobachtungsobjekt am Himmel ausgerichtet werden und die Bewegung des Bobachtungsobjektes über den Himmel kann mittels der beiden Dreheinrichtungen nachgeführt werden.

Die beiden zueinander orthogonalen Achsen können dabei so ausgerichtet werden, dass die erste Achse die Rektaszensionsachse und die zweite Achse die Deklinationsachse ist. Damit kann die erfindungsgemäße Vorrichtung als parallaktische Montierung verwendet werden.

Bevorzugterweise ist dabei eine Polhöhenverstellung vorgesehen, mit der die erste Achse, beispielsweise als Rektaszensionsachse bzw. Stundenachse, entsprechend der geographischen Lage des Beobachtungsortes ausgerichtet werden kann. Zudem kann eine Rotationseinrichtung vorgesehen sein, mit der die Vorrichtung um die Vertikalachse drehbar ist. Typischerweise erfolgt die Ausrichtung der ersten Achse einmalig bezüglich eines geographischen Beobachtungsortes und bleibt dann über den gesamten Beobachtungszeitraum unverändert, d.h. die Polhöhenverstellung und damit die Lage der ersten Achse kann dann in der einmal eingestellten Position verbleiben. Nach der Ausrichtung können alle weiteren Bewegungen des Teleskops mittels der Dreheinrichtungen ausgeführt werden.

Alternativ kann die erste Achse der Vorrichtung auch vertikal (senkrecht zum Horizont) ausgerichtet sein. Damit ergibt sich eine azimutale Montierung.

Alternativ kann die erste Achse der Vorrichtung auch beliebig geneigt ausgerichtet sein. Damit ergibt sich funktionell ebenfalls eine azimutale Montierung, die jedoch mit einem anderen Beobachtungsort auf der Erde korrespondiert.

Die erste Achse kann aber auch horizontal ausgerichtet sein, um eine Alt-Alt-Montierung zu ermöglichen.

Durch fluchtende Achsen von Abtrieb und Verstellwelle können in vorteilhafter Weise Vibrationen und Querkräfte an der Verstellwelle vermieden werden, wodurch eine ruhigere, gleichmäßige und schwingungsfreie Drehbewegung erreicht ist.

Der Antrieb mit der Abtriebswelle bildet somit einen Direktantrieb mit der Verstellwelle aus. Es sind keine Übersetzungen zwischen Antrieb und Abtrieb vorgesehen.

In der Dreheinrichtung sind die Abtriebswelle und die Verstellwelle einstückig ausgebildet. Dadurch sind keine Verbindungsschritte notwendig, so dass Ungenauigkeiten bezüglich der Ausrichtung und/oder Kopplung der Verstellwelle und der Abtriebswelle vermieden sind.

In der Dreheinrichtung ist der Antrieb ein Elektromotor in Form eines Torque-Motor. Die präzise Steuerung bei gleichzeitig hohen möglichen Geschwindigkeiten ermöglichen dabei eine hohe Positioniergenauigkeit und gleichzeitig hohe Verstellgeschwindigkeiten, wie auch einen besonders gleichmäßigen Lauf.

Ein Rotor des Elektromotors ist mit der Verstellwelle verbunden. Der Rotor, der aus einer Vielzahl von Magneten bestehen kann, ist dabei beispielsweise mit der Verstellwelle bzw. mit der Abtriebswelle verschraubt oder anderweitig befestigt. Dabei können der Rotor als ganzes oder die den Rotor bildenden Magneten einzeln mit der Welle in dem Fachmann bekannter Weise verbunden sein.

Die Dreheinrichtung umfasst ein Gehäuse, in welchem die Verstellwelle drehbar gelagert ist und wobei ein Stator des Elektromotors an dem Gehäuse befestigt ist. Der Stator kann dabei aus regelbaren Elektromagneten bestehen, die einzeln oder in Gruppen an dem Gehäuse befestigt sein können. Die Regelung der Elektromagneten kann dabei in dem Fachmann insbesondere bezüglich eines Torque-Motors bekannter Weise erfolgen. In vorteilhafter Weise kann dabei ein weiteres Gehäuse, in oder an welchem der Antrieb angeordnet ist, vermieden werden, was zu einer kompakteren Bauform der Dreheinrichtung führt.

Ferner kann eine elektronische Regelung oder Steuerung vorgesehen sein, welche innerhalb des Gehäuses und/oder an einer anderen Stelle außerhalb des Gehäuses vorgesehen sein kann. Die Steuerung bzw. die Regeleinrichtung kann dabei mit einem Computer verbunden sein und von diesem gesteuert werden. Alternativ oder ergänzend kann auch eine spezielle elektronische Steuerung vorgesehen sein, mit der das Teleskop über die Dreheinrichtung verbunden sein kann. Somit können beispielsweise die Drehgeschwindigkeit, die Drehrichtung, die Beschleunigung und weitere Parameter bezüglich der Drehung des Teleskops vorgegeben werden.

Das Gehäuse kann auch Befestigungseinrichtungen aufweisen, mit denen das Gehäuse der ersten Dreheinrichtung an einem Stativ oder einer Polhöhenverstellung befestigt wird. Zudem ist die Verstellwelle der ersten Dreheinrichtung an dem Gehäuse einer zweiten Dreheinrichtung befestigbar. Dabei ist die Befestigung so ausgelegt, dass die Verstellwelle der ersten Dreheinrichtung und die Verstellwelle der zweiten Dreheinrichtung in aneinander befestigtem Zustand orthogonal zueinander ausgerichtet sind. An der Verstellwelle der zweiten Dreheinrichtung kann dann die Optik eines Teleskops befestigt werden. Dazu können insbesondere schnell lösbare und/oder standardisierte Befestigungseinrichtungen vorgesehen sein, so dass ein einfacher und schneller Austausch der Optik bzw. des Teleskops möglich ist, so dass die erfindungsgemäße Vorrichtung bzw. die Montierung mit verschiedenen Teleskopen bzw. optischen Geräten verwendbar ist.

Die erste und zweite Dreheinrichtung sind dabei in ihrem Aufbau gleich unterschieden, so dass beide modular zusammengesetzt werden können.

Die Dreheinrichtung kann dabei für jegliche Größe von Teleskopen ausgelegt werden und die Erfindung ist von der verwendeten Optik unabhängig.

Diese und andere Merkmale der Erfindungen werden deutlicher beim Lesen der nun folgenden Beschreibung einer bevorzugten Ausführungsform der Erfindung, die unter Bezugnahme der Figuren erfolgt, wobei:
- Fig. 1: eine Teleskopmontierung gemäß der Erfindung darstellt;
- Fig. 2: eine erfindungsgemäße Dreheinrichtung vergrößert und detaillierter zeigt; und
- Fig. 3a und b: jeweils eine Perspektivansicht der Dreheinrichtung aus Fig. 2 zeigen.

In der folgenden Beschreibung detaillierter Ausführungsformen sind gleiche oder ähnliche Elemente mit gleichen Bezugszeichen versehen.

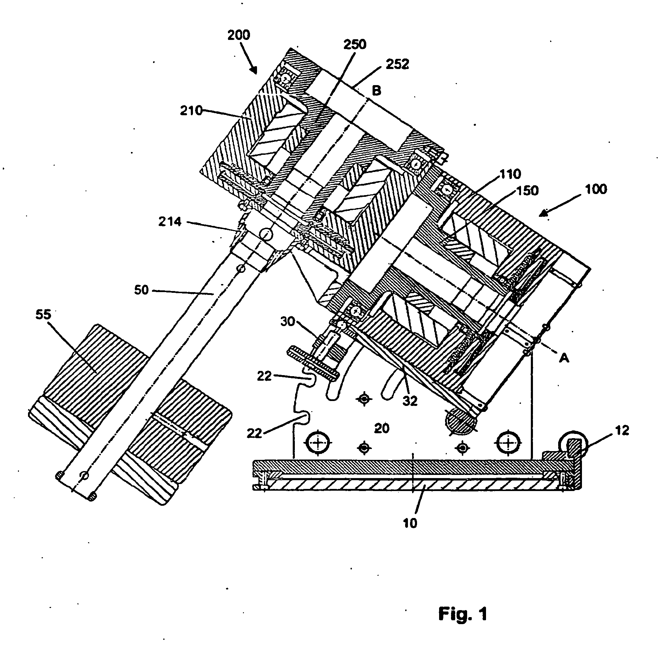

Fig. 1 zeigt eine erfindungsgemäße Montierung für ein Teleskop. Die Montierung ist hier in parallaktischer Aufstellung gezeigt; es ist jedoch für den Fachmann ersichtlich, dass die dargestellte Montierung auch als azimutale Montierung oder als Alt-Alt-Montierung verwendet werden kann.

Die Montierung weist eine Basis 10 auf, mit welcher die Montierung auf einem Stativ oder einer anderen Halterung montiert werden kann. Die Basis 10 kann eine Drehvorrichtung aufweisen, die beispielsweise mit einer Arretierung und Feinverstellung 12 justierbar bzw. arretierbar ist und mit der die Montierung um die Vertikalachse drehbar angeordnet ist. Typischerweise wird damit die Montierung einmal in Azimut entsprechend dem geographischen Beobachtungsort ausgerichtet und verbleibt dann über den gesamten Beobachtungszeitraum in der ausgerichteten Position. Auf der Basis 10 ist eine Polhöhenverstellung 20 vorgesehen, welche es erlaubt, ein erstes Drehelement 100 so einzustellen, dass die Drehachse A im wesentlichen parallel zur Erdachse steht, d.h. die Polhöhenverstellung muss in an sich bekannter Weise lediglich einmal für den Beobachtungszeitraum bezüglich eines bestimmten geographischen Beobachtungsorts auf der Erde eingestellt werden und kann dann in dieser Lage verbleiben. Zur Verstellung der Polhöhe ist eine Grobrasterung 22 sowie eine Feineinstellung 30 vorgesehen, mit der die erste Drehachse A ausgerichtet wird.

Ein Gehäuse 110 der ersten Dreheinrichtung 100 ist dabei fest mit der Montageplatte 32 der Polhöhenverstellung 20 verbunden. Der Begriff "feste Verbindung" bezieht sich hier lediglich auf die feste Befestigung während der Benutzung des Teleskops. Das erste Drehelement 100 kann dabei so ausgelegt sein, dass es zum Beispiel mit einer Schraubverbindung oder ähnlichen lösbar, zum Beispiel zum Transport, mit der Polhöhenverstellung 20 verbunden ist. In dem Gehäuse 110 der ersten Dreheinrichtung 100 ist eine Welle 150 befindlich, welche in Gebrauch fest mit einem Gehäuse 210 einer zweiten Dreheinrichtung 200 verbunden ist. Die feste Verbindung kann dabei über Schraubverbindungen oder ähnliches erfolgen und somit lösbar sein. Die Welle 250 liegt dabei auf der zweiten Achse der Montierung und entspricht bei parallaktischer Aufstellung der Deklinationsachse (DEC) und bei azimutaler Aufstellung der Elevationsachse. Die Welle 250 weist einen Teleskopflansch 252 auf, an dem ein Teleskop (nicht dargestellt) aufgesetzt werden kann. Der Teleskopflansch 252 kann dabei eine Standardverbindung sein, so dass eine Vielzahl von verschiedenen Teleskopen auf den Teleskopflansch 252 aufgesetzt werden können, so dass die Montierung mit einer Vielzahl von Teleskopen verwendet werden kann.

Mit der zweiten Dreheinrichtung 200 ist zudem eine Verlängerung 50 verbunden, welche mit einem Gewicht 55 beaufschlagt ist. Das Gewicht 55 dient zum Ausgleich des Teleskopgewichtes, um die Belastung der Lager in der ersten Dreheinrichtung 100 und der zweiten Dreheinrichtung 200 zu verringern und um eine präzisere Verstellung des Teleskops zu erreichen. Das Gewicht 55 kann dabei dem Gewicht des anzuflanschenden Teleskops entsprechend gewählt werden. Das Gewicht 55 kann durch z.B. ein zweites Teleskop oder ein beliebiges anderes Instrument, Teil, etc. ersetzt werden - wichtig ist nur der Effekt des Gewichtsausgleichs.

Die Verlängerung 55 ist dabei entlang der zweiten Achse B ausgerichtet und kann entweder an dem Kegelstumpf 214, welcher mit dem Gehäuse 210 fest verbunden ist, bzw. mit einem Abschnitt des Gehäuses 210 verbunden sein. In diesem Fall können die Verlängerung 50 und das Gewicht 55 nicht um die Achse B rotieren.

Es kann aber auch gewünscht sein, dass das Gewicht 55, insbesondere dann, wenn es durch ein Teleskop oder eine andere optische Einrichtung ersetzt wird, um die Achse B drehbar ist. Dazu kann die Verlängerung 50 auch an bzw. mit der Welle 250 befestigt sein, so dass die Verlängerung 50 und evtl. auch das Gewicht 55 synchron mit einem an Teleskopflansch 252 angeflanschten Teleskop um die Achse B drehen kann.

Bei der ersten Dreheinrichtung 100, oder wenn keine Anbringung eines Gewichtes vorgesehen sein soll, kann der Kegelstumpf auch weggelassen sein oder beispielsweise durch eine Abdeckung ersetzt sein.

Die erste Dreheinrichtung 100 zur Drehung um die erste Achse A, also die Stundenachse oder Rektaszensionsachse in parallaktischer Aufstellung, und die zweite Dreheinrichtung 200 zur Drehung um die zweite Achse B, der Deklinationsachse in parallaktischer Aufstellung, weisen prinzipiell den gleichen Aufbau auf und unterscheiden sich nur in achsenspezifischen Einzelheiten, wie der Befestigung des Gehäuses sowie der Befestigung weiterer Komponenten an den jeweiligen Dreheinrichtungen.

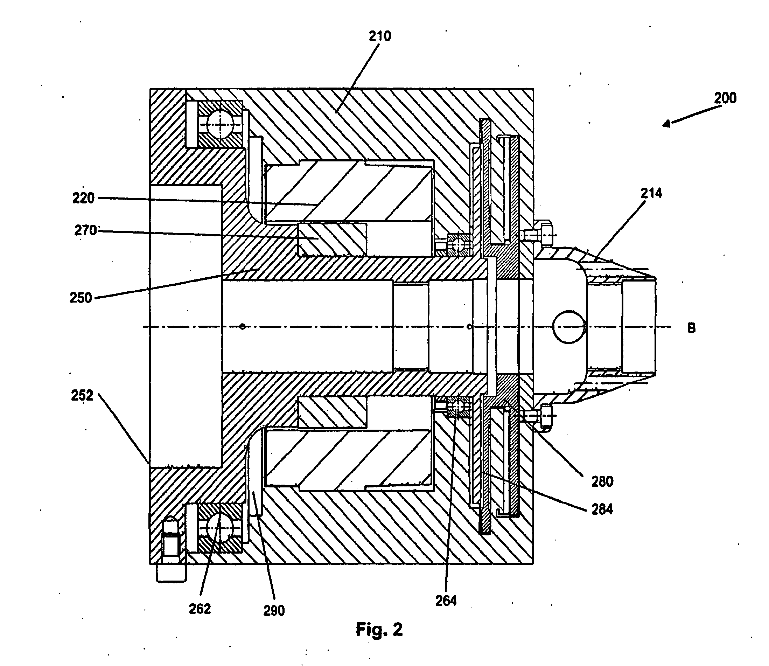

Die zweite Dreheinrichtung 200 ist in Fig. 2 im Detail dargestellt. Der Fachmann wird dabei erkennen, dass die in Fig. 2 dargestellte Dreheinrichtung mit ihren wesentlichen Merkmalen auch als erste Dreheinrichtung 100 verwendet werden kann.

Im Gehäuse 210 der zweiten Dreheinrichtung 200 ist die zweite Welle 250 über ein erstes Wälzlager 262 und ein zweites Wälzlager 264 drehbar um die Achse B gelagert. An der Welle 250 ist ein Rotor 270 eines Torque-Motors beispielsweise über eine Schraubverbindung befestigt. Der Rotor 270 kann dabei mehrere Elemente umfassen, die entlang und/oder um die Welle 250 angeordnet sind. Jedes Element des Rotors 270 kann dabei ein statischer Magnet sein. Dem Rotor 270 des Torque-Motors radial nach außen gegenüber angeordnet ist ein Stator 220 des Torque-Motors. Der Stator 220 kann aus mehreren Elementen bestehen, beispielweise aus magnetisierbaren Elementen oder Elektromagneten, die axial um den Rotor 270 in dem Gehäuse 210 feststehend angeordnet sind. Das Drehelement 200 kann dabei zusätzlich über eine Bremseinrichtung 280 verfügen, die es ermöglicht, eine mit der Welle 250 fest verbundene Bremsscheibe 284 beispielsweise pneumatisch zu bremsen, so dass die Bewegung der Welle 250 im Gehäuse 210 eingeschränkt oder angehalten werden kann, wodurch eine präzise Einstellung bzw. Führung des Teleskops erreicht werden kann. Die Bremseinrichtung 280 kann auch lediglich zu Sicherheitszwecken dienen, um bei Stromausfall ein freies Weiterdrehen der Montierung zu unterbinden.

Die Dreheinrichtung 200 weist darüber hinaus ein Winkelmesssystem 290 auf zur Bestimmung der Winkelposition und/oder der Rotationsgeschwindigkeit der Welle 250 bezüglich des Gehäuses 210. Dazu können handelsübliche Winkelmesssysteme vorgesehen sein, wie sie Fachleuten in Verbindung mit Torque-Motoren bekannt sind. Die von dem Winkelmesssystem 290 ermittelte Position und/oder Rotationsgeschwindigkeit kann in an sich bekannter Weise zur Steuerung des Motors verwendet werden.

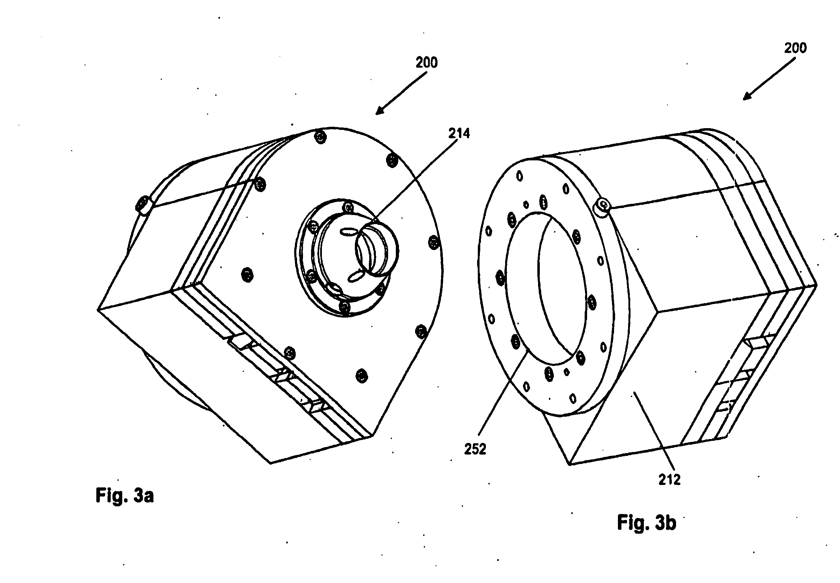

Fig. 3a und 3b zeigen zwei perspektivische Ansichten des zweiten Drehelements 200.

Fig. 3a zeigt dabei die Seite der Dreheinrichtung 200, an der der Kegelstumpf 214 zur Aufnahme der Verlängerung 50 und die Gewichte 55 angeordnet sind.

Fig. 3b zeigt die teleskopseitige Ansicht der Welle 250 mit dem Teleskopflansch 252.

Fig. 3a und 3b zeigen auch die Unterseite 112, 212 des Gehäuses 110 bzw. 210, mit dem das zweite Drehelement 100 bzw. 200 and der Welle 150 bzw. 250 oder an den Flansch 152 bzw. 252 des ersten Drehelements 100 befestigt werden kann.

Die hier dargestellte Ausführungsform zeigt lediglich eine spezielle Ausführungsform der Erfindung und ist nicht einschränkend. Beispielsweise können das erste Drehelement 100 und das zweite Drehelement 200 auch einzeln verwendet werden, um jeweils nur die Drehung um eine Achse auszuführen. Weiterhin können das erste und das zweite Drehelement beispielsweise auch azimutal montiert werden, so dass beispielsweise die erste Achse A der ersten Welle 150 des ersten Drehelements 100 vertikal ausgerichtet ist und die zweite Achse B des zweiten Drehelements 200 horizontal ausgerichtet ist, so dass sie eine Schwenkung des Teleskops zwischen Horizont und Zenit ermöglicht.

Es ergibt sich für den Fachmann, dass mit der vorliegenden Erfindung auch eine Alt-Alt Montierung realisierbar ist.

## Patentansprüche

1. Vorrichtung zur drehbaren Montierung eines Teleskops mit zumindest zwei zueinander im Wesentlichen orthogonalen Achsen (A, B), wobei
a. das Teleskop um die zumindest zwei Achsen mittels einer jeweiligen Dreheinrichtung einer Teleskopmontierung drehbar ist,
b. die jeweilige Dreheinrichtung eine erste Verstellwelle (150; 250) und einen Antrieb mit einer Abtriebswelle aufweist, welcher einen Direktantrieb mit der Verstellwelle ausbildet, wobei
i. die jeweiligen Achsen der Wellen (A; B) fluchten,
ii. die Abtriebswelle und die Verstellwelle (150; 250) einstückig ausgebildet sind, und
iii. der Antrieb ein Elektromotor in Form eines Torque-Motors ist, dessen Rotor (270) an der Verstellwelle befestigt ist,
c. die jeweilige Dreheinrichtung ein Gehäuse (110; 210) umfasst, in welchem die Verstellwelle (150; 250) drehbar gelagert ist, wobei ein Stator (220) des Elektromotors an dem Gehäuse befestigt ist,
d. die Verstellwelle der ersten Dreheinrichtung an dem Gehäuse der zweiten Dreheinrichtung befestigbar ist, und
e. die jeweiligen Dreheinrichtungen in ihrem Aufbau gleich sind, so dass sie modular zusammensetzbar sind.

2. Vorrichtung nach Anspruch 1, wobei die erste Achse die Rektaszensionsachse und die zweite Achse die Deklinationsachse ist.

3. Vorrichtung nach Anspruch 2, zudem umfassend eine Polhöhenverstellung (20).

4. Vorrichtung nach Anspruch 1, wobei die erste Achse (A) vertikal ausgerichtet ist.

5. Vorrichtung nach Anspruch 1, wobei die erste Achse (A) horizontal ausgerichtet ist.

6. Vorrichtung nach einem der Ansprüche 1 bis 5, wobei die Vorrichtung zur einseitigen Befestigung eines Teleskops ausgelegt ist.

7. Vorrichtung nach einem der Ansprüche 1 bis 6, wobei die Vorrichtung eine deutsche Montierung ist.

## Claims

1. A device for rotatably mounting of a telescope comprising at least two matually substantially orthogonal axis (A, B), wherein
a. the telescope is rotatably about the at least two axis by a respective rotational device of a telescope mounting,
b. the respective rotational device having a first working shaft (150; 250) and a drive with a drive shaft, which forms a direct drive with the working shaft, wherein
i. the respective axis of the shafts (A; B) are aligned,
ii. the drive shaft and the working shaft (150; 250) are formed as a single piece, and
iii. the drive is an electric torque-motor, which rotor (270) is mounted on the working shaft,
c. the respective rotational device comprising a housing (110; 210), in which the working shaft (150; 250) is rotatably supported, wherein a stator (220) of the electric motor is mounted at the housing,
d. the working shaft of the first rotational device is mountable at the housing of the second rotational device, and
e. the respective rotational devices are in their construction the same so that they are modularly assembled.

2. The device according to claim 1, wherein the first axis is the right ascension axis and the second axis is the declination axis.

3. The device according to claim 2, further comprising a polar adjustment (20).

4. The device according to claim 1, wherein the first axis (A) is arranged vertically.

5. The device according to claim 1, wherein the first axis (A) is arranged horizontally.

6. The device to any of the claims 1 to 5, wherein the device is adapted for a one side attachment of a telescope.

7. The device according to anyone of the claims 1 to 6, wherein the device is a Germantype telescope mount.

## Revendications

1. Dispositif pour le montage en rotation d'un télescope avec au moins deux axes (A, B) sensiblement orthogonaux l'un par rapport à l'autre, dans lequel
a) le télescope est rotatif par rapport à au moins deux axes au moyen d'un dispositif de rotation respectif d'une monture de télescope,
b) le dispositif de rotation respectif comprend un premier arbre de réglage (150 ; 250) et un dispositif d'entraînement avec un arbre d'entraînement qui forme un entraînement direct avec l'arbre de réglage, dans lequel
i. les axes respectifs (A ; B) des arbres sont alignés,
ii. l'arbre d'entraînement et l'arbre de réglage (150 ; 250) sont formés d'un seul morceau, et
iii. l'entraîement est un moteur électrique sous la forme d'un moteur couple, dont un rotor (270) est attaché à l'arbre de réglage,
c) le dispositif de rotation respectif comprend un boîtier (110 ; 210) dans lequel l'arbre de réglage (150; 250) est pivotant, un stator (220) du moteur électrique étant monté sur le boîtier,
d) l'arbre de réglage du premier dispositif de rotation peut être fixé au boîtier du deuxième dispositif de rotation, et
e) les dispositifs de rotation respectifs sont sensiblement identiques dans leur construction, de sorte qu'ils sont assemblables de manière modulaire.

2. Dispositif selon la revendication 1, dans lequel le premier axe est un axe d'ascension droite et le deuxième axe est un axe de déclinaison.

3. Dispositif selon la revendication 2, comprenant un réglage (20) de la latitude.

4. Dispositif selon la revendication 1, dans lequel le premier axe (A) est agencé vertical.

5. Dispositif selon la revendication 1, dans lequel le premier axe (A) est agencé horizontal.

6. Dispositif selon l'une des revendications 1 à 5, dans lequel le dispositif est prévu pour un attachement latéral d'un télescope.

7. Dispositif selon l'une des revendications 1 à 6, dans lequel le dispositif est une monture de type allemand.
